# FASCICULE DE BREVET EUROPEEN

(11) **EP 1 604 541 B1**
(45) Date de publication et mention de la délivrance du brevet: **26.05.2010**
(21) Numéro de dépôt: 04717125.1
(22) Date de dépôt: 04.03.2004
(51) Int. Cl.: H04W 64/00, G01S 5/00

(54) **DETERMINATION DE POSITIONS DE TERMINAUX DE COMMUNICATION MOBILES A L'AIDE DE DONNEES DE NAVIGATION D'ORIGINES DIFFERENTES**
ERMITTLUNG VON POSITIONEN VON MOBILFUNKENDGERÄTEN MIT HILFE VON NAVIGATIONSDATEN VON ANDEREM URSPRUNG
DETERMINATION OF THE POSITION OF MOBILE COMMUNICATION TERMINALS WITH THE AID OF NAVIGATION DATA OF VARIOUS ORIGINS

(30) Priorité: 07.03.2003 FR 0302830
(43) Date de publication de la demande: 14.12.2005
(73) Titulaire: Alcatel Lucent, 75008 Paris (FR)
(72) Inventeur: MICHELON, Julien, F-31500 Toulouse (FR); FLAMENT, Didier, F-31130 Quint-Fonsegrives (FR)
(74) Mandataire: Hedarchet, Stéphane
(86) Numéro de dépôt international: PCT/FR2004/000515
(87) Numéro de publication internationale: WO 2004/082316

(56) Documents cités:
- WO-A-01/95642
- WO-A-02/23215
- US-B1- 6 449 486
- CUI Y J ET AL: "Autonomous vehicle positioning with GPS in urban canyon environments" 21 mai 2001 (2001-05-21), PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY: IEEE, US, VOL. VOL. 1 OF 4, PAGE( , XP010550297 ISBN: 0-7803-6576-3 page 1105, colonne de droite, ligne 13 - page 1106, colonne de gauche, ligne 12 page 1108, colonne de gauche, ligne 25 - page 1109, colonne de gauche, ligne 35

## Description

L'invention concerne le domaine du positionnement de terminaux de communication mobiles au sein d'installations de télécommunications.

On entend ici par installation de télécommunications, une installation comportant notamment au moins un réseau de diffusion, par exemple radiophonique (et notamment numérique), ou satellitaire, ou multimédia large bande, et/ou un réseau de téléphonie mobile. Par ailleurs, on désigne dans ce qui suit par réseau de télécommunications tous les types de réseau, d'une installation de télécommunications selon l'invention, capables de transmettre par voie d'ondes des (trames de) données de communication, quelle qu'en soit la forme.

Comme le sait l'homme de l'art, de plus en plus de terminaux de communication mobiles sont équipés d'applications reposant au moins en partie sur la détermination de leurs positions respectives. En outre, de plus en plus de services, offerts par les opérateurs des réseaux de télécommunications mobiles à leurs clients possesseurs de terminaux mobiles, reposent, au moins en partie, sur la connaissance des positions de leurs terminaux mobiles.

La détermination des positions peut s'effectuer selon deux techniques différentes. Une première technique consiste à déterminer la position du terminal mobile par traitement des signaux (modulés en phase et à accès multiple, de type CDMA ou FDMA), et des données de navigation qu'ils contiennent, fournis par au moins quatre satellites différents d'un réseau de positionnement de type GNSS (pour « Global Navigation Satellite System »), comme par exemple le réseau GPS, ou le réseau GLONASS, ou encore le futur réseau GALILEO. Cette première technique nécessite que le terminal mobile, objet du positionnement, soit équipé d'un dispositif de positionnement par satellite.

Une seconde technique consiste à estimer la position d'un terminal mobile au niveau des systèmes de stations de base (ou BSS), que comportent certains réseaux cellulaires de télécommunications mobiles, tels que les réseaux GSM/GPRS et UMTS. De façon simplifiée, cette estimation nécessite un échange de messages (de type « paging message ») entre le terminal mobile et te système BSS, destiné à permettre la détermination de la cellule dans laquelle est situé le terminal mobile puis sa localisation au sein de la cellule par une analyse du temps de propagation des messages.

La première technique offre une précision de positionnement de l'ordre de la cinquantaine à la centaine de mètres qui est incompatible avec certaines applications ou certains services liés à l'environnement immédiat des terminaux mobiles. De plus, cette première technique ne peut être mise en oeuvre qu'à condition que le terminal mobile puisse recevoir simultanément les signaux et acquérir les données de navigation d'au moins quatre satellites. Or, il est fréquent que cette condition ne soit pas satisfaite. C'est notamment le cas dans certains environnements urbains ou accidentés (appelés «canyons urbains »), tels que les zones montagneuses, les zones à forte densité d'immeubles de grande hauteur, les tunnels, et l'intérieur des locaux.

La seconde technique offre une précision de positionnement de l'ordre de quelques centaines à quelques milliers de mètres selon les dimensions des cellules du réseau de télécommunications. Elle est donc également incompatible avec certaines applications ou certains services liés à l'environnement immédiat des terminaux mobiles.

Pour tenter d'améliorer la situation, il a été proposé de combiner la première technique avec une autre technique, comme par exemple une technique inertielle, ou bien de combiner les données de navigation provenant de réseaux de positionnement différents (y compris le réseau LORAN C), Mais, ces combinaisons sont onéreuses et/ou n'offrent pas une précision de positionnement suffisamment satisfaisante et/ou ne peuvent pas être mises en oeuvre dans les environnements de type canyons urbains et/ou ne peuvent pas fonctionner de façon continue et autonome sur des zones de grande étendue.

Tel est également le cas du document US 6449486 enseignant la combinaison de signaux de différents réseaux (par exemple GSM et DECT).

Aucune solution connue n'apportant une entière satisfaction, l'invention a donc pour but d'améliorer la Situation.

Elle propose à cet effet un terminal de communication mobile pour une installation de télécommunications comprenant au moins un réseau de télécommunications à répéteurs terrestres, au moins un réseau de positionnement par satellites pouvant diffuser des signaux contenant des données de navigation, ledit terminal de communication mobile comprenant des moyens de réception et de calcul capables de déterminer sa position à partir des signaux reçus, et des données de navigation qu'ils contiennent, et des moyens de communication capables de recevoir des trames de données de communication du réseau de télécommunications.

Ce terminal mobile se caractérise par le fait que ses moyens de réception sont capables de recevoir du réseau de télécommunications des trames dites augmentées, comportant des données de communication et des données de navigation complémentaires, et qu'il comprend des moyens d'extraction chargés d'extraire des données de navigation complémentaires de trames augmentées reçues par ses moyens de communication et de les adresser à ses moyens de réception et de calcul afin qu'ils déterminent sa position à partir des données de navigation et des données de navigation complémentaires reçues et extraites.

De la sorte, si un terminal n'est pas en mesure de recevoir simultanément les signaux contenant les données de navigation d'au moins quatre satellites du réseau de positionnement, il peut recevoir du réseau de télécommunications, auquel il est rattaché, les données de navigation complémentaires qui vont lui permettre de déterminer sa position, éventuellement avec une précision améliorée.

Le terminal mobile selon l'invention peut comporter d'autres caractéristiques qui pourront être prises séparément ou en combinaison, et notamment :
- des moyens d'extraction capables d'extraire des trames augmentées reçues des données de navigation complémentaires agencées sous la forme de premiers messages de navigation (par exemple de type SBAS pour « Satellite Based Augmentation System »),
- des moyens d'extraction (ME) capables d'extraire des trames augmentées reçues des données de navigation complémentaires agencées sous la forme de seconds messages de navigation, par exemple issus des répéteurs du réseau de télécommunications,
- des moyens d'extraction capables d'extraire des trames augmentées reçues des données de navigation complémentaires agencées sous la forme de premiers et de seconds messages de navigation,
- des moyens de communication et des moyens d'extraction agencés pour recevoir et traiter des trames augmentées transmises sous la forme de signaux modulés en fréquence, par exemple selon la technique dite OFDM. Dans ce cas, au moins les seconds messages de navigation sont intégrés dans un préambule cyclique de trame après une conversion de fréquence des données de communication,
- des moyens de communication et des moyens d'extraction agencés pour recevoir et traiter des trames augmentées transmises sous forme de signaux modulés en phase et à accès multiple, par exemple selon la technique dite W-CDMA. Dans ce cas, les moyens de communication et les moyens d'extraction peuvent être agencés de manière à recevoir et traiter des trames augmentées transmises après un encodage des premiers et/ou seconds messages de navigation à l'aide d'une séquence de codes pseudo-aléatoires orthogonaux choisie,
- des moyens de communication et des moyens d'extraction agencés pour recevoir et traiter des trames augmentées comportant des données d'identification destinées à différencier les répéteurs terrestres les uns des autres. Dans ce cas, les données d'identification peuvent être les codes pseudo-aléatoires utilisés dans une séquence,
- des moyens de réception et de calcul comprenant des moyens de réception de signaux et des moyens de calcul agencés pour déterminer conjointement des pseudo-distances à partir des signaux reçus et des données de navigation qu'ils contiennent, et des moyens de communication et des moyens d'extraction agencés pour déterminer conjointement des pseudo-distances à partir des trames augmentées reçues et des données de navigation contenues dans les seconds messages qu'elles contiennent, ces pseudo-distances ainsi que celles déterminées par les moyens de réception et les moyens de calcul étant alors transmises aux moyens de réception et de calcul de sorte qu'ils déterminent les positions,
- des moyens de réception et de calcul comprenant des moyens de correction couplés aux moyens d'extraction et agencés pour déterminer, à partir des premiers messages de navigation reçus, des corrections à appliquer aux données de navigation reçues du réseau de positionnement, avant de procéder à la détermination des positions.

L'invention porte également sur un répéteur terrestre pour un réseau de télécommunications d'une installation de télécommunications comprenant également au moins un réseau de positionnement par satellites capable de délivrer des signaux contenant des données de navigation, ledit réseau de télécommunications comprenant des terminaux de communication mobiles du type de ceux présentés ci-avant.

Ce répéteur terrestre se caractérise par le fait qu'il comprend des moyens d'intégration chargés d'intégrer des données de navigation complémentaires en des endroits choisis de certaines au moins des trames de données de communication du réseau de télécommunications, de manière à constituer des trames augmentées, et des moyens d'émission/réception chargés de transmettre aux terminaux mobiles ces trames augmentées.

Le répéteur terrestre selon l'invention peut comporter d'autres caractéristiques qui pourront être prises séparément ou en combinaison, et notamment :
- des moyens d'émission/réception capables de recevoir du réseau de télécommunications des trames augmentées comportant des données de navigation complémentaires agencées sous la forme de premiers messages de navigation, par exemple de type SBAS, et de retransmettre ces trames augmentées reçues à destination des terminaux de communication,
- des moyens d'intégration agencés pour constituer des trames augmentées par intégration de seconds messages de navigation comportant des données de navigation complémentaires,
- des moyens d'intégration agencés pour intégrer des seconds messages de navigation dans des trames augmentées reçues du réseau de télécommunications et contenant déjà des premiers messages de navigation,
- des moyens d'intégration capables de constituer des trames augmentées sous la forme de signaux modulés en fréquence selon la technique dite OFDM. Dans ce cas, l'intégration des seconds messages de navigation (au moins) s'effectue préférentiellement dans le préambule cyclique de la trame après conversion de fréquence des données de communication. Cela permet en effet, d'assurer la synchronisation de fréquence avec les moyens d'extraction des terminaux mobiles. En variante, les moyens d'intégration peuvent être configurés de manière à constituer les trames augmentées sous forme de signaux modulés en phase et à accès multiple, par exemple selon la technique dite W-CDMA. Dans ce cas, les moyens d'intégration peuvent être configurés de manière à constituer les trames augmentées après encodage des premiers et/ou seconds messages de navigation à l'aide d'une séquence de codes pseudo-aléatoires orthogonaux choisie, de manière à permettre au terminal mobile de différencier les répéteurs terrestres par un traitement de corrélation analogue à celui effectué dans les terminaux GPS,
- des moyens d'intégration agencés pour intégrer dans les trames augmentées des données d'identification destinées à différencier les répéteurs terrestres les uns des autres,

L'invention porte en outre sur un serveur de flux pour un réseau de télécommunications à répéteurs terrestres (RT) du type de ceux présentés ci-avant

Le serveur de flux selon l'invention se caractérise par le fait qu'il est capable d'être alimenté en données de communication par un serveur de communication et en données de navigation complémentaires, relatives au réseau de positionnement, par un serveur de navigation, et de constituer des trames dites augmentées, à transmettre au moins aux répéteurs terrestres et aux terminaux mobiles du réseau de télécommunications, à partir des données de communication et des données de navigation complémentaires reçues.

Un tel serveur est préférentiellement chargé de constituer des trames augmentées comportant des données de navigation complémentaires se présentant sous la forme de premiers messages de navigation, par exemple de type SBAS. Par ailleurs, il peut être agencé de manière à intégrer dans un nombre choisi de trames augmentées successives un même premier message de navigation.

L'invention porte en outre sur un réseau de télécommunications comportant au moins un répéteur terrestre et au moins un serveur de flux du type de ceux présentés ci-avant. Un tel réseau peut être avantageusement choisi parmi les réseaux radio terrestres de téléphonie mobile, les réseaux de diffusion radiophoniques, les réseaux de diffusion de données multimédia large bande, et les réseaux de diffusion hybrides. On entend ici par « réseau de diffusion hybride » (ou réseau hybride) un réseau de télécommunications par satellites comportant une multiplicité de répéteurs terrestres.

L'invention porte également sur une installation de télécommunications comprenant au moins un réseau de télécommunications à répéteurs terrestres du type de celui présenté ci-avant, au moins un réseau de positionnement par satellites capable de délivrer des signaux contenant des données de navigation, et au moins un terminal de communication mobile du type de celui présenté ci-avant.

L'invention porte également sur un procédé de détermination de positions de terminaux de communications mobiles au sein d'une installation de télécommunications comprenant au moins un réseau de télécommunications à répéteurs terrestres, capable de transmettre des trames de données de communication, et au moins un réseau de positionnement par satellites capable de transmettre (ou diffuser) des signaux contenant des données de navigation.

Ce procédé se caractérise par le fait qu'il consiste, d'une première part, à transmettre aux terminaux mobiles des signaux contenant des données de navigation à l'aide du réseau de positionnement, d'une deuxième part, à constituer des trames augmentées par intégration de données de navigation complémentaires en des endroits choisis de trames de données de communication, puis à transmettre ces trames augmentées aux terminaux mobiles, et d'une troisième part, à déterminer, au niveau des terminaux mobiles, leurs positions respectives à partir des signaux, et des données de navigation qu'ils contiennent, reçus du réseau de positionnement et des données de navigation complémentaires contenues dans les trames augmentées reçues du réseau de télécommunications.

Le procédé selon l'invention peut comporter d'autres caractéristiques qui pourront être prises séparément ou en combinaison, et notamment :
- certaines données de navigation complémentaires peuvent provenir du réseau de positionnement. Dans ce cas, ces données complémentaires sont intégrées dans les trames augmentées, en amont des répéteurs terrestres, sous la forme de premiers messages de navigation, par exemple de type SBAS. On peut par ailleurs réitérer un nombre de fois choisi l'intégration d'un même premier message de navigation dans des trames augmentées successives.
- certaines données de navigation complémentaires peuvent être intégrées dans les trames augmentées, au niveau des répéteurs terrestres, sous la forme de seconds messages de navigation,
- certaines des données de navigation complémentaires peuvent être intégrées sous forme de seconds messages de navigation, au niveau des répéteurs terrestres, dans des trames augmentées reçues contenant déjà des premiers messages de navigation,
- les trames augmentées peuvent être transmises par les répéteurs terrestres sous forme de signaux modulés en fréquence selon la technique dite OFDM. Dans ce cas, il est préférable d'intégrer au moins les seconds messages de navigation dans un préambule cyclique de trame après avoir effectué la conversion de fréquence des données de communication. En variante, les trames augmentées peuvent être transmises par les répéteurs terrestres sous forme de signaux modulés en phase et à accès multiple, par exemple selon la technique dite W-CDMA. Par ailleurs, la transmission des trames augmentées peut s'effectuer après encodage des premiers et/ou seconds messages de navigation à l'aide d'une séquence de codes pseudo-aléatoires orthogonaux choisie de manière à permettre au terminal mobile de différencier les répéteurs par un traitement de corrélation analogue à celui effectué par les terminaux GPS,
- on peut intégrer dans les trames augmentées, au niveau des répéteurs terrestres, des données d'identification destinées à les différencier les uns des autres,
- on peut déterminer au niveau des terminaux mobiles des pseudo-distances, d'une part, à partir des signaux reçus et des données de navigation qu'ils contiennent, et d'autre part, à partir des trames augmentées reçues et des données de navigation contenues dans les seconds messages qu'elles contiennent, ces pseudo-distances servant alors à déterminer les positions,
- on peut déterminer dans les terminaux mobiles, à partir des premiers messages de navigation reçus, des corrections à appliquer aux données de navigation reçues du réseau de positionnement, avant de procéder à la détermination des positions.

D'autres caractéristiques et avantages de l'invention apparaîtront à l'examen de la description détaillée ci-après, et des dessins annexés, sur lesquels :
- la figure 1 illustre de façon schématique un exemple de réalisation d'une installation de télécommunications selon l'invention,
- la figure 2 illustre de façon schématique un exemple de réalisation d'un terminal de communication mobile selon l'invention,
- la figure 3 illustre de façon schématique un exemple d'agencement d'un message de navigation intégré dans une trame augmentée par un répéteur terrestre, et
- la figure 4 détaille schématiquement une partie du message de navigation de la figure 3, et
- la figure 5 illustre de façon schématique l'agencement d'une trame modulée de type OFDM.

Les dessins annexés pourront non seulement servir à compléter l'invention, mais aussi contribuer à sa définition, le cas échéant.

L'invention porte sur la détermination du positionnement de terminaux de communication mobiles au sein d'une installation de télécommunications. On entend ici par « installation de télécommunications », une installation comportant au moins un réseau de télécommunications mobiles à répéteurs terrestres, au moins un réseau de positionnement par satellites et des terminaux de communication mobiles.

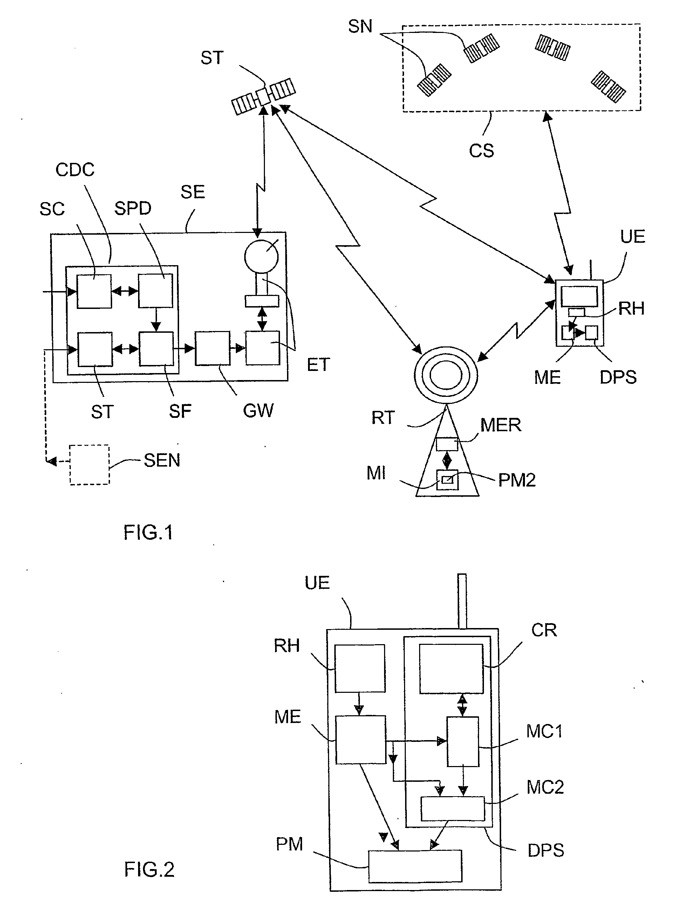

Dans l'exemple illustré sur la figure 1, l'installation ne comporte qu'un unique réseau de télécommunications mobile, de type hybride, et un unique réseau de positionnement par satellites (matérialisé par sa constellation CS de satellites SN). On entend ici par réseau hybride un réseau de télécommunications par satellites comportant une multiplicité de répéteurs terrestres.

Le réseau de télécommunications mobile comprend, de façon simplifiée, une ou plusieurs stations émettrices SE, un ou plusieurs satellites de télécommunications ST et une multiplicité de répéteurs terrestres RT implantés en des endroits choisis du réseau. Par ailleurs, le réseau de positionnement par satellites est de type GNSS (pour « Global Navigation Satellite System »). Il s'agit par exemple du réseau GPS. Mais, il pourrait s'agir de tout autre type de réseau GNSS, comme par exemple le réseau GLONASS ou le futur réseau GALILEO, ou bien d'une combinaison d'au moins deux des trois réseaux précités. Ce réseau de positionnement par satellites peut être éventuellement couplé à un système dit « d'augmentation », comme par exemple un système SBAS reposant sur une diffusion par satellites géostationnaires. Mais, tout autre type de système d'augmentation peut être envisagé qu'il soit local ou accessible via le réseau Internet.

Bien entendu, l'invention n'est pas limitée aux seuls réseaux de télécommunications satellitaires, hybrides. Elle concerne également, notamment, les réseaux de télécommunications radio, et notamment les réseaux cellulaires de type GSM/GPRS et UMTS (et tous leurs équivalents), comportant une multiplicité de répéteurs terrestres (ou de stations de base) équipé(e)s selon l'invention.

Par « terminal de communication mobile » UE, on entend ici tout type de terminal communicant capable de recevoir, d'une part, des données de communications, ici diffusées par un réseau de télécommunications mobile satellitaire hybride (directement via l'un de ses satellites de télécommunications ST et indirectement via ses répéteurs terrestres RT), et d'autre part, des données de navigation du réseau de positionnement par satellites CS. Il pourra donc s'agir de téléphones mobiles, d'assistants numériques personnels (ou PDA), d'ordinateurs portables, de dispositifs communicants dédiés, embarqués dans un véhicule terrestre, maritime ou aérien et implémentant au moins une application liée au positionnement.

Dans ce qui suit, on considère à titre d'exemple illustratif que les terminaux de communication mobiles UE sont des téléphones mobiles pouvant communiquer avec le réseau de télécommunications mobile (ci-après appelé réseau hybride) grâce à un récepteur hybride RH, et pouvant communiquer avec le réseau de positionnement par satellites CS grâce à un dispositif de positionnement par satellites DPS par exemple de type GPS, ci-après appelé dispositif DPS.

Comme indiqué précédemment, un dispositif DPS ne peut déterminer correctement la position du terminal mobile UE dans lequel il est implanté qu'à condition qu'il reçoive les signaux, et les données de navigation qu'ils contiennent, d'au moins quatre satellites SN de la constellation CS du réseau de positionnement. Cette condition étant fréquemment non satisfaite, et la précision du positionnement étant souvent insuffisante au regard de l'application qui l'utilise, l'invention propose d'utiliser le « contexte » de communication offert par le réseau hybride pour alimenter le téléphone mobile UE en données de navigation complémentaires de celles fournies par la constellation CS.

A cet effet, l'invention propose trois mises en oeuvre différentes. Une première mise en oeuvre consiste à intégrer dans les trames de communication émises par les stations émettrices SE du réseau hybride, à destination des téléphones mobiles UE, via les satellites de télécommunications et les répéteurs terrestres RT, des premiers messages de navigation comportant des données de navigation complémentaires fournies par un système d'augmentation. Une deuxième mise en oeuvre consiste à intégrer dans les trames de communication qui sont réémises par les répéteurs terrestres RT, à destination des téléphones mobiles UE, des seconds messages de navigation comportant des données de navigation complémentaires. Une troisième mise en oeuvre consiste à combiner les première et deuxième mises en oeuvre.

Dans ce qui suit, seule la troisième mise en oeuvre est décrite en détail, du fait qu'elle combine les deux autres.

Comme illustré sur la figure 1, une station émettrice SE d'un réseau hybride selon l'invention comprend classiquement un centre de distribution de contenu ou « content hub » CDC couplé à un émetteur terrestre (ou « up-link earth station ») ET, de préférence via une passerelle d'accès (ou « gateway ») GW.

Dans l'exemple illustré, le centre de distribution de contenu CDC comprend une voie d'alimentation en données de communication et une voie d'alimentation en données de navigation complémentaires couplées à un serveur de flux (ou « streamer ») SF, lui même couplé à la passerelle d'accès GW. La voie d'alimentation en données de communication comprend ici classiquement un serveur de contenu SC, alimenté par différentes sources externes en données de communication, et un serveur de programmation de diffusion (ou « broadcast scheduler») SPD alimenté par le serveur de contenu SC et alimentant le serveur de flux SF. La voie d'alimentation en données de navigation complémentaires ne comprend ici qu'un serveur de traitement ST alimenté en données de navigation complémentaires par un serveur de navigation SEN du système d'augmentation, et alimentant le serveur de flux SF.

Le serveur de traitement ST est chargé de constituer des premiers messages de navigation à partir des données de navigation complémentaires qu'il reçoit du serveur de navigation SEN. Préférentiellement, les premiers messages de navigation sont agencés par le serveur de traitement ST sous la forme de messages augmentés de type SBAS (pour « Satellite Based Augmentation System »). Ces messages étant bien connus de l'homme de l'art, ils ne seront pas décrits en détail. Il est simplement rappelé que les messages SBAS contiennent des données destinées à corriger les données de navigation fournies par les satellites ST de la constellation CS, afin d'améliorer la qualité (précision, intégrité, continuité et disponibilité) du positionnement déterminé par un dispositif DPS au sein d'un téléphone mobile UE. Plus précisément, ces données SBAS permettent généralement de corriger des erreurs de synchronisation temporelle entre satellites de navigation SN et/ou des erreurs d'éphémérides et/ou des erreurs de propagation. Elles peuvent également contenir des informations relatives à l'intégrité des données de navigation.

Le serveur de flux SF est préférentiellement agencé pour placer les premiers messages de navigation, ici de type SBAS, et les données de communication dans des trames de communication, dites augmentées. Ces trames augmentées sont en fait similaires aux trames de communication qui sont transmises au satellite de télécommunications ST en l'absence de données SBAS. En d'autres termes, ce sont des trames de communication classiques qui comportent en plus un premier message de navigation.

Chaque fois que la station émettrice SE veut transmettre aux téléphones mobiles UE des données SBAS relatives au réseau de positionnement par satellites CS, son serveur de traitement ST génère un premier message de navigation en « encapsulant » les données SBAS selon un format choisi (compatible avec les configurations des dispositifs DPS), puis le transmet au serveur de flux SF. De préférence, chaque premier message de navigation constitue ce que l'homme de l'art appelle une NOF (pour « Navigation Overlay Frame »). Une telle NOF satisfait au standard RTCA DO229 (dans ses versions A, B, C et ultérieures et ses révisions), et peut varier selon les régions (EGNOS / WAAS / MSAS, et analogues).

Il est important de noter que le premier message de navigation (NOF) n'est pas forcément synchronisé avec une référence temporelle choisie. Par conséquent, lorsqu'une telle synchronisation s'avère nécessaire, le serveur de traitement ST peut être agencé de manière à adjoindre un marquage temporel à un premier message de navigation. En fait, les premiers messages de navigation étant intégrés dans des trames augmentées faisant, ici, l'objet d'une diffusion par satellite SN, le marquage temporel n'est requis qu'en présence d'une diffusion dont les contraintes temporelles sont faibles.

Lorsque le serveur de flux SF est en possession d'un premier message de navigation encapsulé, et de données de communication à diffuser, il génère une trame augmentée qu'il transmet à l'émetteur terrestre ET, via la passerelle d'accès GW. La trame est alors transmise par voie d'ondes au satellite de télécommunications ST concerné qui va ensuite la retransmettre à destination des téléphones mobiles UE et des répéteurs terrestres RT de son réseau hybride.

Afin d'augmenter la probabilité qu'un téléphone mobile UE puisse effectivement recevoir le premier message de navigation contenu dans une trame augmentée diffusée, le serveur de flux SF peut être agencé de manière à réitérer un nombre de fois choisi l'intégration de ce premier message de navigation dans des trames augmentées successives. Dans ce cas, le serveur de flux SF comprend une mémoire destinée à stocker, de façon provisoire, les premiers messages de navigation de manière à pouvoir les intégrer chaque fois qu'il reçoit l'ordre de diffuser de nouvelles données de communication.

Comme cela est illustré sur la figure 2, chaque téléphone mobile UE, selon l'invention, comporte un dispositif DPS, capable de recevoir les données de navigation transmises par la constellation CS de satellites SN, et un récepteur hybride RH capable de recevoir les trames (augmentées) de communication diffusées par le réseau hybride (satellite de télécommunications ST et répéteurs terrestres RT).

Le téléphone mobile UE comprend en outre un module d'extraction de données de navigation complémentaires ME couplé au récepteur hybride RH et alimentant, d'une part, le dispositif DPS, et d'autre part, le module de traitement PM dudit téléphone UE, qui gère notamment les applications et services requérant les mesures de position.

Le module d'extraction ME est chargé de discriminer parmi les trames augmentées reçues du réseau hybride les différents types de données de navigation complémentaires qu'elles contiennent. Comme indiqué précédemment, le réseau hybride diffuse, par l'intermédiaire de ses satellites de télécommunications ST et de ses répéteurs terrestres RT, des trames augmentées contenant des premiers messages de navigation. Mais, les répéteurs terrestres RT peuvent être agencés de manière à insérer dans des trames de communication, notamment reçues d'un satellite de télécommunications ST de son réseau hybride, des seconds messages de navigation, contenant des données de navigation à partir desquelles pourront être déterminées des pseudo-distances (ou « pseudoranges »), comme on le verra plus loin.

Ces répéteurs terrestres RT étant avantageusement placés en des endroits fixes, de positions connues, ils peuvent en effet être utilisés comme des pseudo-satellites (ou « pseudolites »), bien connus de l'homme de l'art.

Pour ce faire, les répéteurs terrestres RT comportent en complément de leurs éléments habituels, et notamment de leur module d'émission/réception MER, un module d'intégration MI chargé d'intégrer dans les trames de communication, à transmettre aux téléphones mobiles UE, des seconds messages de navigation. Bien entendu, lorsque le répéteur terrestre RT doit retransmettre une trame augmentée comportant déjà un premier message de navigation, son module d'intégration MI intègre le second message de navigation dans ladite trame augmentée.

Le module d'intégration MI peut être également agencé de manière à répéter un même premier message dans des trames de communication successives (augmentées ou non).

Les répéteurs terrestres RT sont préférentiellement synchronisés avec leur réseau hybride par rapport à une référence temporelle fournie par le réseau de positionnement par satellites CS, tant pour les données de navigation que pour les données de communication. Cette synchronisation, dont la précision est typiquement de l'ordre de 10 ns (à un écart type), peut se faire sur une fréquence locale standardisée grâce aux oscillateurs locaux des répéteurs terrestres RT.

Le récepteur hybride RH et le module d'extraction ME sont par ailleurs chargés de déterminer, à réception de trames augmentées contenant un second message, des pseudo-distances (ou « pseudoranges »). Plus précisément, le récepteur hybride RH détermine tout d'abord le temps de propagation de la trame de communication augmentée entre le répéteur terrestre RT et le récepteur hybride RH. Cette détermination s'effectue par (auto-)corrélation du message reçu avec un réplicat prédictif du message attendu.

Lorsque les pseudo-distances ont été déterminées et les données de navigation extraites d'un second message contenu dans une trame augmentée reçue, le module d'extraction ME les communique au dispositif DPS, comme on le verra plus loin. Les données de communication qui accompagnent ces messages de navigation sont transmises au module de traitement PM du téléphone mobile UE.

Le dispositif DPS possède, par exemple, la structure classique d'un dispositif de positionnement capable de corriger les données de navigation à l'aide de données de correction SBAS. Dans un tel dispositif classique, les données SBAS proviennent habituellement d'un satellite géostationnaire du système d'augmentation couplé au réseau de positionnement par satellites CS. Il comprend par conséquent un récepteur calé sur la fréquence d'émission du satellite géostationnaire (il s'agit généralement de la fréquence dite L1 de 1575 MHz qui est la même que celle de la constellation CS). La carte CR de réception du dispositif DPS de l'invention peut être configurée de manière à recevoir les signaux SBAS du système augmenté. Mais cela n'est pas obligatoire si toutes les données SBAS proviennent du module d'extraction ME.

Plus précisément, le dispositif DPS de l'invention comprend, d'une première part, une carte CR dédiée à la réception des données de navigation transmises par la constellation CS, d'une deuxième part, un module de correction MC1 chargé d'appliquer aux données de navigation, fournies par la carte CR, des corrections fonctions des données SBAS fournies par le module d'extraction ME, et d'une troisième part, un module de calcul MC2 chargé de déterminer la position du téléphone mobile UE à partir, notamment, des données de navigation corrigées délivrées par le module de correction MC1 et des pseudo-distances délivrées par la carte CR et le module d'extraction ME, et d'alimenter en positions le module de traitement PM du téléphone mobile DE.

Comme indiqué précédemment, dans le mode de réalisation illustré, le téléphone mobile UE, selon l'invention, est également capable de recevoir des données de navigation complémentaires agencées sous la forme de seconds messages de navigation et provenant également du réseau hybride. C'est la raison pour laquelle, dans cet exemple, le module d'extraction ME comporte deux sorties, l'une pour alimenter le module de correction MC1 en données extraites des premiers messages de navigation (données d'augmentation, par exemple de type SBAS), et l'autre pour alimenter le module de calcul MC2 en données de navigation et en pseudo-distances extraites et/ou déduites des seconds messages de navigation.

Comme le sait l'homme de l'art, les signaux, qui contiennent les données de navigation et qui sont transmis au dispositif DPS par la constellation CS, sont utilisés par la carte CR pour déterminer tout d'abord le temps de propagation entre le téléphone mobile UE, dans lequel il est implanté, et les satellites de navigation SN qui ont émis ces signaux, puis des pseudo-distances (ou « pseudoranges ») à partir des temps de propagation. C'est à partir de ces pseudo-distances que le module de calcul MC2 détermine la position du téléphone mobile UE, au minimum par une quadrilatération, et plus souvent par une résolution numérique de type méthode des moindres carrés à quatre inconnues et au moins quatre mesures.

Les pseudo-distances et les données de navigation associées, transmises par le module d'extraction ME, sont sensiblement du même type que celles qui sont déterminées par la carte CR. Cependant, les pseudo-distances, transmises par le module d'extraction ME, provenant de répéteurs terrestres RT de positions fixes et constantes, elles n'ont pas besoin de faire l'objet des mêmes corrections que celles appliquées par le module de correction MC1 aux pseudo-distances déterminées par la carte CR. C'est la raison pour laquelle, dans l'exemple illustré, la seconde sortie du module d'extraction ME alimente directement le module de calcul MC2. Ce dernier détermine donc la position du téléphone mobile UE à partir des pseudo-distances déduites des données corrigées délivrées par le module de correction MC1 et des données non corrigées délivrées par le module d'extraction ME.

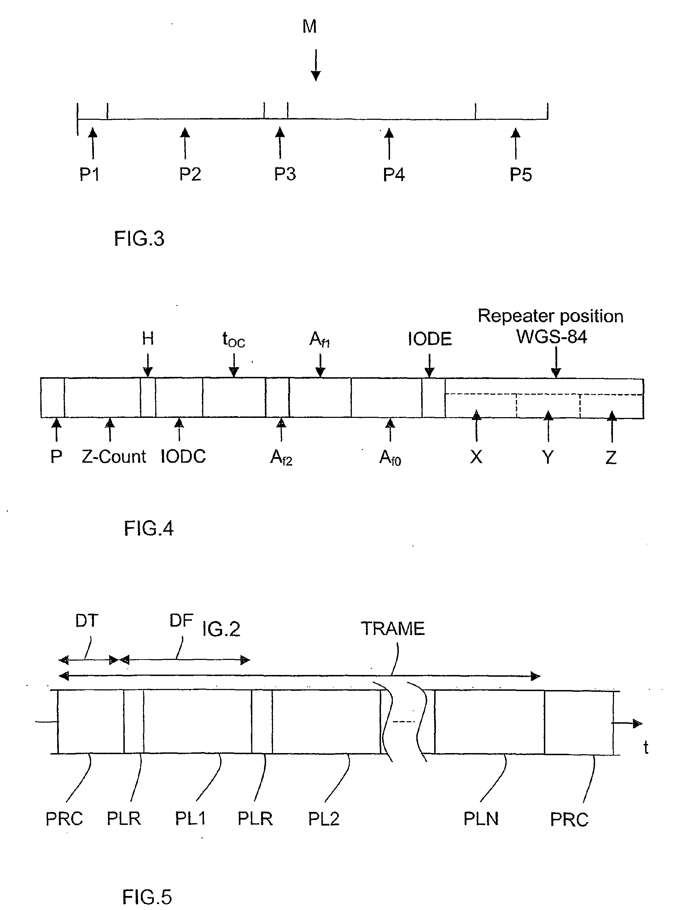

Lorsque la trame augmentée comporte un premier et un second messages de navigation, ces deux messages peuvent constituer un unique message de navigation du type de celui illustré sur la figure 3. Un tel message comporte par exemple 450 bits, répartis dans une première plage P1 de 8 bits, formant un préambule pour les données du second message, une deuxième plage P2 de 206 bits pour les données du second message, une troisième plage P3 de 6 bits, formant un identifiant de type de message pour le premier message (ici SBAS), une quatrième plage P4 de 212 bits pour les données SBAS du premier message, et enfin une cinquième plage P5 de 18 bits pour le contrôle de parité.

Préférentiellement, les première P1 et deuxième P2 plages sont agencées comme un message de type GPS. Un tel agencement est illustré sur la figure 4. Il prévoit par exemple une première zone P (égale à la plage P1) de 8 bits choisis parmi 24 bits (et répondant à la norme DO229 (dans ses versions A, B, C et ultérieures et ses révisions)), une deuxième zone Z-Count de 29 bits (présentant la même définition que dans un message GPS), une troisième zone H de 1 bit pour définir le statut du répéteur terrestre RT, une quatrième zone IODC de 10 bits (« Issue Of Data Clock ») pour les problèmes d'horloge, des cinquième t_{oc}, sixième A_{f2}, septième A_{f1} et huitième A_{f0} zones, respectivement de 16bits, 8 bits, 16 bits et 22 bits, pour définir les éphémérides d'horloge du répéteur terrestre qui permettront au dispositif DPS de déterminer le décalage temporel du répéteur terrestre par rapport au temps de référence de la constellation CS du réseau de positionnement (GPS), une neuvième zone IODE de 8 bits (« Issue Of Data Ephemeris ») pour les problèmes d'éphémérides, et une dixième zone « Repeater position WGS-84 » de 96 bits (3x32 bits) pour définir la position géographique (en X, Y et Z) dans un référentiel ECEF (typiquement WGS-84, ou plus généralement le même référentiel que celui utilisé par la constellation CS).

Les troisième P3 et quatrième P4 plages constituent préférentiellement une copie du premier message (SBAS NOF) reçu d'une station émettrice SE via le satellite de télécommunications ST. Ce premier message répond donc préférentiellement à la norme RTCA DO229 dans ses versions A, B, C et ultérieures et ses révisions.

L'agencement du message de navigation présenté ci-avant, n'est qu'un exemple illustratif, non limitatif. Le message pourra par conséquent comporter un nombre de bits supérieur ou inférieur à 450. On peut notamment envisager une variante dans laquelle on se passe du champ IODE de la neuvième zone, du fait que le répéteur terrestre RT est implanté fixement sur le sol. Cela peut notamment permettre d'affecter ses 8 bits au contrôle de parité. On peut également envisager une variante dans laquelle on réduit à 4 le nombre de bits du champ IODC de la quatrième zone. Cela peut notamment permettre d'affecter 6 bits supplémentaires au contrôle de parité.

On pourrait omettre d'insérer le premier message dans la trame retransmise. Mais, il est malgré tout préférable de l'insérer car les téléphones mobiles UE ne peuvent pas toujours recevoir les trames augmentées (contenant les premiers messages) transmises par le satellite de télécommunications ST.

Le mode d'intégration des messages de navigation dans les trames augmentées, au niveau des répéteurs terrestres RT, dépend du mode de transmission utilisé.

Par exemple, lorsque les signaux définissant les trames sont modulés en fréquence selon la technique dite OFDM, les messages de navigation (premier et second) sont préférentiellement insérés dans le préambule cyclique PRC de la trame, lequel définit le domaine temporel DT qui est indispensable à la synchronisation fréquentielle (et donc à la corrélation temporelle) des signaux au niveau du téléphone mobile UE. Le préambule cyclique est préférentiellement inséré dans la trame après que les données de communications (utiles) aient fait l'objet d'une conversion dans le domaine fréquentiel choisi DF.

Un exemple de trame modulée en OFDM est illustré sur la figure 5. Une trame de N symboles (représentatifs de données de communication) comprend un préambule cyclique PRC, suivi d'une plage de réserve PLR, puis d'une plage PL1 réservée à la partie utile du premier symbole, puis d'une nouvelle plage de réserve PLR, puis d'une plage PL2 réservée à la partie utile du deuxième symbole, et ainsi de suite jusqu'à la Nième plage PLN réservée à la partie utile du Nième symbole.

En variante, les signaux définissant les trames peuvent être modulés et codés selon la technique dite W-CDMA. Ce type de modulation permet une transmission des données de navigation complémentaires sensiblement identique à celle utilisée par les satellites de navigation SN de la constellation CS. Cette technique de modulation, tout comme la précédente (OFDM), étant bien connue de l'homme de l'art, elle ne sera pas décrite en détail. Il est simplement rappelé que la porteuse en bande L (ou autre) est modulée par étalement de spectre (BPSK) à l'aide d'un code binaire résultant de la somme (modulo 2) d'un code pseudo-aléatoire (choisi parmi une liste de codes orthogonaux entre eux) et des données de navigation complémentaires à transmettre.

La démodulation peut s'effectuer au niveau du récepteur hybride RH du téléphone mobile UE, de la même façon que lorsqu'elle est faite par le démodulateur de la carte CR d'un dispositif DPS classique fonctionnant sur la fréquence L1 actuelle ou sur toute autre fréquence, comme par exemple la future fréquence L5. Le récepteur hybride RH comporte donc, à cet effet, un démodulateur soit de type OFDM, soit de type W-CDMA, selon le type de modulation effectué au niveau des répéteurs terrestres RT du réseau hybride. Mais, on peut également envisager dans le cas d'une modulation de type W-CDMA que la démodulation se fasse au niveau du récepteur hybride RH, par exemple pour ce qui concerne le « de-scrambling », puis au niveau du module d'extraction ME, par exemple pour ce qui concerne le démultiplexage.

Il est important de noter que la bande de fréquence, utilisée par les réseaux de télécommunications de l'installation selon l'invention pour transmettre les données de navigation complémentaires, couvre tout le spectre (bande L, bande S, etc..) à l'exclusion des bandes protégées, telles que les bandes L1 et L5.

Le module d'intégration MI du répéteur terrestre RT peut également être agencé de manière à intégrer dans les trames augmentées à transmettre des données d'identification permettant à un téléphone mobile UE de différencier les répéteurs terrestres RT qui l'environnent. Cela est notamment nécessaire lorsque les répéteurs terrestres RT sont décorrélés géographiquement (un téléphone mobile UE ne peut en effet recevoir des balises (ou « beacon ») que de la cellule dans la quelle il est situé, ou de la cellule voisine lorsqu'il est proche de sa bordure).

Ces données d'identification sont par exemple les codes pseudo-aléatoires utilisés pour le multiplexage. On peut envisager qu'une famille réservée de ces codes serve à effectuer un bourrage (ou « padding »), le nombre de codes de bourrage dépendant alors de la portée locale des répéteurs terrestres RT ou du nombre de répéteurs terrestres qu'un téléphone mobile UE peut voir. Par exemple, il peut comporter quatre codes ou bien sept codes. Ces codes pseudo-aléatoires sont choisis dans la liste des Gold Codes, et sont de préférence différents des 36 codes utilisés par le réseau GPS.

L'invention offre également un procédé de détermination de positions de terminaux de communications mobiles UE au sein d'une installation de télécommunications comprenant au moins un réseau de télécommunications à répéteurs terrestres et au moins un réseau de positionnement par satellites.

Celui-ci peut être notamment mis en oeuvre à l'aide de l'installation de télécommunications présentée ci-avant. Les fonctions et sous-fonctions principales et optionnelles assurées par les étapes de ce procédé étant sensiblement identiques à celles assurées par les différents moyens constituant l'installation, seules seront résumées ci-après les étapes mettant en oeuvre les fonctions principales du procédé selon l'invention.

Ce procédé consiste, d'une première part, à transmettre aux terminaux mobiles UE des signaux contenant des données de navigation à l'aide du réseau de positionnement CS, d'une deuxième part, à constituer des trames augmentées par intégration de données de navigation complémentaires en des endroits choisis de trames de données de communication, puis à transmettre ces trames augmentées aux terminaux mobiles UE, et d'une troisième part, à déterminer, au niveau des terminaux mobiles UE, leurs positions respectives à partir des données de navigation reçues du réseau de positionnement et des données de navigation complémentaires contenues dans les trames augmentées reçues du réseau de télécommunications.

L'invention ne se limite pas aux modes de réalisation d'installation de télécommunications, de réseau de télécommunications mobile, de répéteur terrestre, de serveur de flux, de terminal de communication mobile et de procédé décrits ci-avant, seulement à titre d'exemple, mais elle englobe toutes les variantes que pourra envisager l'homme de l'art dans le cadre des revendications ci-après.

Ainsi, dans ce qui précède il a été décrit une installation dans laquelle on transmettait des premiers et seconds messages de navigation aux terminaux de communication mobiles, par l'intermédiaire du réseau de télécommunications. Mais, on peut envisager de ne transmettre auxdits terminaux mobiles que des premiers messages, ou que des seconds messages, par l'intermédiaire du réseau de télécommunications.

Par ailleurs, dans ce qui précède il a été décrit une installation dans laquelle le réseau de télécommunications est de type satellitaire hybride. Mais l'invention concerne également les réseaux radio de télécommunications, et en particulier les réseaux cellulaires de type GSM/GPRS et UMTS.

En outre, dans ce qui précède on a décrit des terminaux mobiles comportant un dispositif de positionnement par satellites (DPS) dissocié du récepteur de communication (RH) et du module d'extraction (ME). Mais, on peut envisager qu'ils constituent un unique dispositif de communication et de positionnement, notamment lorsque la bande utilisée pour les communications est compatible avec celle utilisée pour le positionnement. Dans ce cas, une unique carte pourrait être dédiée à la fois à la réception des signaux de navigation et des trames de communication.

## Revendications

1. Terminal de communication mobile (UE) pour une installation de télécommunications comprenant au moins un réseau de télécommunications à répéteurs terrestres (RT) et au moins un réseau de positionnement par satellites (CS), ce réseau de positionnement par satellites étant propre à délivrer des signaux contenant des données de navigation, ledit terminal de communication mobile (UE) comprenant des moyens de réception et de calcul (DPS), propres à déterminer sa position à partir desdits signaux et données de navigation, et des moyens de communication (RH) propres à recevoir des trames de données de communication dudit réseau de télécommunications, **caractérisé en ce que** lesdits moyens de réception sont agencés de manière à recevoir dudit réseau de télécommunications des trames dites augmentées, comportant des données de communication et des données de navigation complémentaires, et **en ce qu'**il comprend des moyens d'extraction (ME) agencés pour extraire des données de navigation complémentaires de trames augmentées reçues par lesdits moyens de communication (RH) et pour les adresser auxdits moyens de réception et de calcul (DPS) afin qu'ils déterminent ladite position à partir desdites données de navigation et desdites données de navigation complémentaires.

2. Terminal selon la revendication 1, **caractérisé en ce que** lesdits moyens d'extraction (ME) sont propres à extraire desdites trames augmentées reçues des données de navigation complémentaires agencées sous forme de premiers messages de navigation.

3. Terminal selon la revendication 2, **caractérisé en ce que** lesdits premiers messages de navigation sont de type SBAS.

4. Terminal selon l'une des revendications 1 à 3, **caractérisé en ce que** lesdits moyens d'extraction (ME) sont propres à extraire desdites trames augmentées reçues des données de navigation complémentaires agencées sous forme de seconds messages de navigation.

5. Terminal selon la revendication 4, **caractérisé en ce que** lesdites trames augmentées comportant lesdits seconds messages de navigation sont issues desdits répéteurs dudit réseau de télécommunications.

6. Terminal selon l'une des revendications 2 à 5, **caractérisé en ce que** lesdits moyens d'extraction (ME) sont propres à extraire desdites trame augmentées reçues des données de navigation complémentaires agencées sous forme desdits premiers et desdits seconds messages de navigation.

7. Terminal selon l'une des revendications 1 à 6, **caractérisé en ce que** lesdits moyens de communication (RH) et lesdits moyens d'extraction (ME) sont agencés pour recevoir et traiter des trames augmentées transmises sous forme de signaux modulés en fréquence selon la technique dite OFDM.

8. Terminal selon la revendication 4, 5, 6, ou selon la combinaison de la revendication 7 avec l'une des revendications 4 à 6, **caractérisé en ce qu'**au moins lesdits seconds messages de navigation sont intégrés dans un préambule cyclique de trame après une conversion de fréquence des données de communication.

9. Terminal selon l'une des revendications 1 à 6, **caractérisé en ce que** lesdits moyens de communication (RH) et lesdits moyens d'extraction (ME) sont agencés pour recevoir et traiter des trames augmentées transmises sous forme de signaux modulés en phase et à accès multiple.

10. Terminal selon la revendication 9, **caractérisé en ce que** la modulation en phase et à accès multiple est selon la technique dite W-CDMA.

11. Terminal selon l'une des revendications 9. et 10, **caractérisé en ce que** lesdits moyens de communication (RH) et lesdits moyens, d'extraction (ME) sont agencés pour recevoir et traiter des trames augmentées transmises après encodage des premiers et/ou seconds messages de navigation à l'aide d'une séquence de codes pseudo-aléatoires orthogonaux choisie.

12. Terminal selon l'une des revendications 5 à 11, **caractérisé en ce que** lesdits moyens de communication (RH) et lesdits moyens d'extraction (ME) sont agences pour recevoir et traiter des trames augmentées comportant des données d'identification destinées à différencier lesdits répéteurs terrestres (RT) les uns des autres.

13. Terminal selon la combinaison des revendications 11 et 12, **caractérisé en ce que** lesdits données d'identification sont les codes pseudo-aléatoires utilisés dans une séquence,

14. Terminal selon l'une des revendications 5 à 13, **caractérisé en ce que** lesdits moyens de réception et de calcul (DPS) comprennent des moyens de réception de signaux (CR) et des moyens de calcul (MC1) agencés pour déterminer conjointement des pseudo-distances à partir desdits signaux reçus et des données de navigation qu'ils contiennent, et **en ce que** lesdits moyens de communication (RH) et lesdits moyens d'extraction (ME) sont agencés pour déterminer conjointement des pseudo-distances à partir desdites trames augmentées reçues et des données de navigation contenues dans lesdits seconds messages qu'elles contiennent, ces pseudo-distances ainsi que celles déterminées par lesdits moyens de réception (CR) et lesdits moyens de calcul (MC1) étant alors transmises auxdits moyens de réception et de calcul (DPS) de sorte qu'ils déterminent lesdites positions.

15. Terminal selon l'une des revendications 2 à 14, **caractérisé en ce que** lesdits moyens de réception et de calcul (DPS) comprennent des moyens de correction (MC1) couplés auxdits moyens d'extraction (ME) et agencés pour déterminer, à partir des premiers messages de navigation reçus, des corrections à appliquer aux données de navigation reçues dudit réseau de positionnement (CS), avant de procéder à la détermination desdites positions.

16. Répéteur terrestre (RT) pour un réseau de télécommunications d'une installation de télécommunications comprenant également au moins un réseau de positionnement par satellites (CS),), ce réseau de positionnement par satellites étant propre à délivrer des signaux contenant des données de navigation, ledit réseau de télécommunications comprenant des terminaux de communication mobile (UE) comportant des moyens de réception et de calcul (DPS), propres à déterminer leur position à partir desdits signaux et données de navigation, et des moyens de communication (RH) propres à recevoir des trames de données de communication dudit réseau de télécommunications, **caractérisé en ce qu'**il comprend des moyens d'intégration (MI) agencés pour intégrer des données de navigation complémentaires en des endroits choisis de certaines au moins desdites trames de données de communication, de manière à constituer des trames augmentées, et des moyens d'émission/réception (MER) agencés pour transmettre auxdits terminaux mobiles (UE) lesdites trames augmentées.

17. Répéteur terrestre selon la revendication 16, **caractérisé en ce que** lesdits moyens d'émission/réception (MER) sont propres à recevoir dudit réseau de télécommunications des trames augmentées comportant des données de navigation complémentaires agencées sous forme de premiers messages de navigation, et à retransmettre lesdites trames augmentées reçues à destination desdits terminaux de communication (UE).

18. Répéteur terrestre selon la revendication 17, **caractérisé en ce que** lesdits premiers messages de navigation sont de type SBAS.

19. Répéteur terrestre selon l'une des revendications 16 à 18, **caractérisé en ce que** lesdits moyens d'intégration (MI) sont agencés pour constituer des trames augmentées par intégration de seconds messages de navigation comportant des données de navigation complémentaires.

20. Répéteur terrestre selon la revendication 19 en combinaison avec l'une des revendications 17 et 18, **caractérisé en ce que** lesdits moyens d'intégration (MI) sont agencés pour intégrer des seconds messages de navigation dans des trames augmentées reçues dudit réseau de télécommunications et contenant des premiers messages de navigation.

21. Répéteur terrestre selon l'une des revendications 19 et 20, **caractérisé en ce que** lesdits moyens d'intégration (MI) sont agencés pour constituer lesdites trames augmentées sous forme de signaux modulés en fréquence selon la technique dite OFDM.

22. Répéteur terrestre selon la revendication 21, **caractérisé en ce que** lesdits moyens d'intégration (MI) sont agencés pour intégrer au moins lesdits seconds messages de navigation dans un préambule cyclique de trame après une conversion de fréquence des données de communication, de manière à assurer une synchronisation de fréquence avec lesdits moyens d'extraction (ME) des terminaux mobiles (UE).

23. Répéteur terrestre selon l'une des revendications 19 et 20, **caractérisé en ce que** lesdits moyens d'intégration (MI) sont agencés pour transmettre lesdites trames augmentées sous forme de signaux modulés en phase et à accès multiple.

24. Répéteur terrestre selon la revendication 23, **caractérisé en ce que** la modulation en phase et à accès multiple s'effectue selon la technique dite W-CDMA.

25. Répéteur terrestre selon l'une des revendications 23 et 24, **caractérisé en ce que** lesdits moyens d'intégration (MI) sont agencés pour effectuer leurs transmissions après encodage des premiers et/ou seconds messages de navigation à l'aide d'une séquence de codes pseudo-aléatoires orthogonaux choisie.

26. Répéteur terrestre selon l'une des revendications 19 à 25, **caractérisé en ce que** lesdits moyens d'intégration (MI) sont agencés pour intégrer dans lesdites trames augmentées des données d'identification destinées à les différencier les uns des autres.

27. Répéteur terrestre selon la combinaison des revendications 25 et 26, **caractérisé en ce que** lesdites données d'identification sont les codes pseudo-aléatoires utilisés dans une séquence.

28. Réseau de télécommunications, **caractérisé en ce qu'**il comprend au moins un répéteur terrestre (RT) selon l'une des revendications 16 à 27 et au moins un serveur de flux (SF), ledit serveur de flux (SF) étant propre à être alimenté en données de communication par un serveur de communication (SC) et en données de navigation complémentaires par un serveur de navigation (SEN), et à constituer des trames dites augmentées à transmettre au moins auxdits répéteurs terrestres (RT) et auxdits terminaux mobiles (UE), à partir desdites données de communication et desdites données de navigation complémentaires..

29. Réseau selon la revendication 28, **caractérisé en ce qu'**il est choisi dans un groupe comprenant au moins les réseaux de diffusion radiophonique, les réseaux de diffusion satellitaire de type hybride, les réseaux de diffusion de données multimédia large bande et les réseaux radio terrestres de téléphonie mobile.

30. Installation de télécommunications, **caractérisée en ce qu'**elle comprend au moins un réseau de télécommunications à répéteurs terrestres (RT) selon l'une des revendications 28 et 29, au moins un réseau de positionnement par satellites (CS) propre à délivrer des signaux contenant des données de navigation, et au moins un terminal de communication mobile (UE) selon l'une des revendications 1 à 15.

31. Procédé de détermination de positions de terminaux de communications mobiles (UE) au sein d'une installation de télécommunications comprenant au moins un réseau de télécommunications à répéteurs terrestres (RT), propre à transmettre des trames de données de communication, et au moins un réseau de positionnement par satellites (CS) propre à délivrer des signaux contenant des données de navigation, **caractérisé en ce qu'**il consiste i) à transmettre auxdits terminaux mobiles (UE) des signaux contenant des données de navigation à l'aide dudit réseau de positionnement (CS), ii) à constituer des trames augmentées par intégration de données de navigation complémentaires en des endroits choisis de trames de données de communication, puis à transmettre lesdites trames augmentées auxdits terminaux mobiles (UE), et iii) à déterminer au niveau desdits terminaux mobiles (UE) leurs positions respectives à partir desdites données de navigation reçues dudit réseau de positionnement (CS) et desdites données de navigation complémentaires contenues dans lesdites trames augmentées reçues dudit réseau de télécommunications.

32. Procédé selon la revendication 31, **caractérisé en ce que** certaines desdites données de navigation complémentaires proviennent dudit réseau de positionnement (CS) et sont intégrées dans lesdites trames augmentées, en amont desdits répéteurs terrestres (RT), sous forme de premiers messages de navigation.

33. Procédé selon la revendication 32, **caractérisé en ce que** lesdits premiers messages de navigation sont de type SBAS.

34. Procédé selon l'une des revendications 32 et 33, **caractérisé en ce que** l'on réitère un nombre de fois choisi l'intégration d'un même premier message de navigation dans des trames augmentées successives.

35. Procédé selon l'une des revendications 31 à 34, **caractérisé en ce que** certaines desdites données de navigation complémentaires sont intégrées dans lesdites trames augmentées, au niveau desdits répéteurs terrestres (RT), sous forme de seconds messages de navigation.

36. Procédé selon la revendication 35 en combinaison avec l'une des revendications 32 à 34, **caractérisé en ce que** certaines desdites données de navigation complémentaires sont intégrées sous forme de seconds messages de navigation, au niveau desdits répéteurs terrestres (RT), dans des trames augmentées reçues contenant des premiers messages de navigation.

37. Procédé selon l'une des revendications 35 et 36, **caractérisé en ce que** lesdites trames augmentées sont transmises par lesdits répéteurs terrestres (RT) sous forme de signaux modulés en fréquence selon la technique dite OFDM.

38. Procédé selon la revendication 37, **caractérisé en ce que** l'on intègre au moins lesdits seconds messages de navigation dans un préambule cyclique de trame après une conversion de fréquence des données de communication, de manière à assurer une synchronisation de fréquence au niveau desdits terminaux mobiles (UE).

39. Procédé selon l'une des revendications 35 et 36, **caractérisé en ce que** lesdites trames augmentées sont transmises par lesdits répéteurs terrestres (RT) sous forme de signaux modulés en phase et à accès multiple.

40. Procédé selon la revendication 39, **caractérisé en ce que** la modulation en phase et à accès multiple s'effectue selon la technique dite W-CDMA.

41. Procédé selon l'une des revendications 39 et 40, **caractérisé en ce que** lesdites trames augmentées sont transmises après encodage des premiers et/ou seconds messages de navigation à l'aide d'une séquence de codes pseudo-aléatoires orthogonaux choisie.

42. Procédé selon l'une des revendications 35 à 41, **caractérisé en ce que** l'on intègre dans lesdites trames augmentées, au niveau desdits répéteurs terrestres (RT), des données d'identification destinées à les différencier les uns des autres.

43. Procédé selon la combinaison des revendications 41 et 42, **caractérisé en ce que** lesdites données d'identification sont les codes pseudo-aléatoires utilisés dans une séquence.

44. Procédé selon l'une des revendications 35 à 43, **caractérisé en ce que** l'on détermine au niveau desdits terminaux mobiles (UE) des pseudo-distances, d'une part, à partir desdits signaux reçus et des données de navigation qu'ils contiennent, et d'autre part, à partir des trames augmentées reçues et des données de navigation contenues dans lesdits seconds messages qu'elles contiennent, ces pseudo-distances servant alors à déterminer lesdites positions.

45. Procédé selon l'une des revendications 32 à 44, **caractérisé en ce que** l'on détermine dans lesdits terminaux mobiles (UE), à partir des premiers messages de navigation reçus, des corrections à appliquer aux données de navigation reçues dudit réseau de positionnement (CS), avant de procéder à la détermination desdites positions.

## Claims

1. A mobile communication terminal (UE) for a telecommunications installation comprising at least one terrestrial-repeater (RT) telecommunications network and at least one satellite positioning network (CS), which satellite positioning network is capable of delivering signals containing navigation data, said mobile communication terminal (UE) comprising reception and calculation means (DPS) capable of determining its position based upon said signals and navigation data, and communication means (RH) capable of receiving communication data frames from said telecommunications network, **characterized in that** said reception means are configured so as to receive so-called augmented frames, comprising communication data and complementary navigation data, from said telecommunications network, and **in that** it comprises extraction means (ME) configured to extract complementary navigation data from augmented frames received by said communication means (RH) and to send them to said reception and calculation means (DPS) in order for them to determine said position based upon said navigation data and said complementary navigation data.

2. A terminal according to claim 1, **characterized in that** said extraction means (ME) are capable of extracting from said received augmented frames complementary navigation data arranged in the form of first navigation messages.

3. A terminal according to claim 2, **characterized in that** said first navigation messages are SBAS messages.

4. A terminal according to one of the claims 1 to 3, **characterized in that** said extraction means (ME) are capable of extracting from said received augmented frames complementary navigation data arranged in the form of second navigation messages.

5. A terminal according to claim 4, **characterized in that** said augmented frames comprising said second navigation messages are taken from said repeaters of said telecommunications network.

6. A terminal according to one of the claims 2 to 5, **characterized in that** said extraction means (ME) are capable of extracting from said received augmented frames complementary navigation data arranged in the form of said first and said second navigation messages.

7. A terminal according to one of the claims 1 to 6, **characterized in that** said communication means (RH) and said extraction means (ME) are configured to receive and process augmented frames transmitted in the form of frequency-modulated signals using the so-called OFDM technique.

8. A terminal according to claim 4, 5, 6, or according to the combination of claim 7 with one of the claims 4 to 6, **characterized in that** at least said second navigation messages are incorporated into a cyclic-shifted frame preamble after a frequency conversion of the communication data.

9. A terminal according to one of the claims 1 to 6, **characterized in that** said communication means (RH) and said extraction means (ME) are configured to receive and process augmented frames transmitted in the form of phase-modulated multiple-access signals.

10. A terminal according to claim 9, **characterized in that** the multiple-access phase-modulation is carried out using the technique known as W-CDMA,

11. A terminal according to one of the claims 9 and 10, **characterized in that** said communication means (RH) and said extraction means (ME) are configured to receive and process augmented frames transmitted after encoding the first and/or second navigation messages with the assistance of a chosen orthogonal pseudo-random sequence of codes.

12. A terminal according to one of the claims 5 to 11, **characterized in that** said communication means (RH) and said extraction means (ME) are configured to receive and process augmented frames comprising identification data intended to distinguish said terrestrial repeaters (RT) from one another:

13. A terminal according to the combination of claims 11 and 12, **characterized in that** said identification data are the pseudo-random codes used within a sequence,

14. A terminal according to one of the claims 5 to 13, **characterized in that** said reception and calculation means (DPS) comprise signal reception means (CR) and calculation means (MC1) configured to jointly determine pseudoranges based upon said received signals and the navigation data that they contain, and **in that** said communication means (RH) and said extraction means (ME) are configured to jointly determine pseudo-distances based upon said received augmented frames and the navigation data contained within said second messages that they contain, these pseudo-distances as well as those determined by said reception means (CR) and said calculation means (MC1) then being transmitted to said reception and calculation means (DPS) so that they may determine said positions.

15. A terminal according to one of the claims 2 to 14, **characterized in that** said reception and calculation means (DPS) comprise correction means (MC1) coupled to said extraction means (ME) and configured to determine, based on the received first navigation messages, corrections to apply to the navigation data received from said positioning network (CS), before proceeding to determine said positions.

16. A terrestrial repeater (RT) for a telecommunications network of a telecommunications installation further comprising at least one satellite positioning network (CS), which satellite positioning network is capable of delivering signals containing navigation data, said telecommunications network comprising mobile communication terminals (UE) comprising reception and calculation means (DPS) capable of determining their position based upon said signals and navigation data, and communication means (RH) capable of receiving communication data frames from said telecommunications network, **characterized in that** it comprises integration means (MI) configured to integrate complementary navigation data into chosen locations in at least some of said communication data frames, so as to constitute augmented frames, and sending/receiving means (MER) configured to transmit said augmented frames to said mobile terminals (UE).

17. A terrestrial repeater according to claim 16, **characterized in that** said sending/receiving means (MER) are capable of receiving from said telecommunications network augmented frames comprising complementary navigation data arranged in the form of first navigation messages, and to retransmit said received augmented frames to said communication terminals (UE).

18. A terrestrial repeater according to claim 17, **characterized in that** said first navigation messages are SBAS messages.

19. A terrestrial repeater according to one of the claims 16 to 18, **characterized in that** said integration means (MI) are configured to constitute augmented frames by integrating second navigation messages comprising complementary navigation data.

20. A terrestrial repeater according to claim 19 in combination with one of the claims 17 and 18, **characterized in that** said integration means (MI) are configured to integrate second navigation messages into augmented frames received from said telecommunications network and containing first navigation messages.

21. A terrestrial repeater according to one of the claims 19 and 20, **characterized in that** said integration means (MI) are configured to constitute said augmented frames in the form of frequency-modulated signals using the so-called OFDM technique.

22. A terrestrial repeater according to claim 21, **characterized in that** said integration means (MI) are configured to integrate at least said second navigation means into a cyclic-shifted frame preamble after a frequency conversion of the communication data, so as to ensure frequency synchronization with said extraction means (ME) of the mobile terminals (UE).

23. A terrestrial repeater according to one of the claims 19 and 20, **characterized in that** said integration means (MI) are configured to transmit said augmented frames in the form of phase-modulated, multiple-access signals.

24. A terrestrial repeater according to claim 23, **characterized in that** the phase-modulation and multiple-access are carried out using the technique known as W-CDMA.

25. A terrestrial repeater according to one of the claims 23 and 24, **characterized in that** said integration means (MI) are configured to perform their transmissions after encoding the first and/or second navigation messages with the assistance of a chosen orthogonal pseudo-random sequence of codes.

26. A terrestrial repeater according to one of the claims 19 to 25, **characterized in that** said integration means (MI) are configured to integrate into said augmented frames identification data intended to distinguish them from one another.

27. A terrestrial repeater according to the combination of claims 25 and 26, **characterized in that** said identification data are pseudo-random codes used within a sequence.

28. A telecommunications network, **characterized in that** it comprises at least one terrestrial repeater (RT) according to one of the claims 16 to 27 and at least one streaming server (SF), said streaming server (SF) being capable of being supplied with communication data by a communication server (SC) and with complementary navigation data by a navigation server (SEN), and to constitute so-called augmented frames to be transmitted to said terrestrial repeaters (RT) and to said mobile terminals (UE), based upon said communication data and said complementary navigation data.

29. A network according to claim 28, **characterized in that** it is chosen from a group comprising at least radio broadcast networks, hybrid satellite broadcast networks, broadband multimedia data broadcast networks, and mobile telephony terrestrial radio networks.

30. A telecommunications installation, **characterized in that** it comprises at least one terrestrial-repeater (RT) telecommunications network according to one of the claims 28 and 29, at least one satellite positioning network (CS) capable of delivering signals containing navigation data, and at least one mobile communication terminal (UE) according to one of the claims 1 to 15.

31. A method for determining the positions of mobile communication terminals (UE) within a telecommunications installation comprising at least one terrestrial-repeater (RT) telecommunications network, capable of transmitting communication data frames, and at least one satellite positioning network (SC) capable of delivering signals containing navigation data, **characterized in that** it consists of i) transmitting to said mobile terminals (UE) signals containing navigation data with the assistance of said positioning network (CS), ii) constituting augmented frames by integrating complementary navigation data at selected locations in communication data frames, then transmitting said augmented frames to said mobile terminals (UE), and iii) determining within said mobile terminals (UE) their respective positions based upon said navigation data received from said positioning network (CS) and upon said complementary navigation data contained within said augmented frames received from said telecommunications network.

32. A method according to claim 31, **characterized in that** some of said complementary navigation data come from said positioning network (CS) and are integrated into said augmented frames before reaching said terrestrial repeaters (RT), in the form of first navigation messages.

33. A method according to claim 32, **characterized in that** said first navigation messages are SBAS messages.

34. A method according to one of the claims 32 and 33, **characterized in that** the integration of a first navigation message within the successive augmented frames is reiterated a chosen number of times.

35. A method according to one of the claims 31 to 34, **characterized in that** some of said complementary navigation data are integrated into said augmented frames, within said terrestrial repeaters (RT), in the form of second navigation messages.

36. A method according to claim 35 in combination with one of the claims 32 to 34, **characterized in that** some of said complementary navigation data are integrated in the form of second navigation messages, within said terrestrial repeaters (RT), into received augmented frames containing first navigation messages.

37. A method according to one of the claims 35 and 36, **characterized in that** said augmented frames are transmitted by said terrestrial repeaters (RT) in the form of frequency-modulated signals using the technique known as OFDM.

38. A method according to claim 37, **characterized in that** at least said second navigation messages are integrated into a cyclic-shifted frame preamble after a frequency conversion of the communication data, so as to ensure frequency synchronization within said mobile terminals (UE).

39. A method according to one of the claims 35 and 36, **characterized in that** said augmented frames are transmitted by said terrestrial repeaters (RT) in the form of phase-modulated, multiple-access signals.

40. A method according to claim 39, **characterized in that** the multiple-access phase-modulation is carried out using the technique known as WCDMA.

41. A method according to claims 39 and 40, **characterized in that** said augmented frames are transmitted after encoding the first and/or second navigation messages with the assistance of a chosen orthogonal pseudo-random sequence of codes.

42. A method according to one of the claims 35 to 41, **characterized in that** identification data is incorporated into said augmented frames, within said terrestrial repeaters (RT), in order to distinguish them from one another.

43. A method according to the combination of claims 41 and 42, **characterized in that** said identification data are pseudo-random codes used within a sequence.

44. A method according to one of the claims 35 to 43, **characterized in that** within said mobile terminals (UE), pseudoranges are determined based upon said received signals and the navigation data that they contain, and upon received augmented frames and navigation data contained within said second messages that they contain, these pseudoranges then serving to determine said positions.

45. A method according to one of the claims 32 to 44, **characterized in that** within said mobile terminals (UE), based upon the received first navigation messages, corrections to be applied to the navigation data received from said positioning network (CS) are determined before proceeding with the determination of said positions.

## Patentansprüche

1. Mobilfunkendgerät (UE) für eine Telekommunikationsanlage mit mindestens einem Telekommunikationsnetz mit terrestrischen Verstärkern (RT) und mindestens einem satellitenbasierten Positionsbestimmungnetz (CS), wobei dieses satellitenbasierte Positionsbestimmungsnetz dazu geeignet ist, Navigationsdaten enthaltende Signale auszugeben, wobei das besagte Mobilfunkendgerät (UE) Empfangs- und Berechnungsmittel (DPS), welche dazu geeignet sind, dessen Position anhand der besagten Signale und Navigationsdaten zu ermitteln, sowie Kommunikationsmittel (RH), welche dazu geeignet sind, Kommunikationsdatenrahmen von dem besagten Telekommunikationsnetz zu empfangen, umfasst, **dadurch gekennzeichnet, dass** die besagten Empfangsmittel dazu ausgelegt sind, von dem besagten Telekommunikationsnetzwerk sogenannte ergänzte Rahmen, welche Kommunikationsdaten und zusätzliche Navigationsdaten enthalten, zu empfangen, und dass es Extraktionsmittel (ME) umfasst, welche dazu ausgelegt sind, zusätzliche Navigationsdaten aus den an den besagten Kommunikationsmitteln (RH) empfangenen ergänzten Rahmen zu extrahieren und diese an die besagten Empfangs- und Berechnungsmittel (DPS) zu senden, damit diese anhand der besagten Navigationsdaten und der besagten zusätzlichen Navigationsdaten die besagte Position ermitteln.

2. Endgerät nach Anspruch 1, **dadurch gekennzeichnet, dass** die besagten Extraktionsmittel (ME) dazu geeignet sind, aus den besagten empfangenen ergänzten Rahmen zusätzliche Navigationsdaten, welche in der Form von ersten Navigationsnachrichtungen gestaltet sind, zu extrahieren.

3. Endgerät nach Anspruch 2, **dadurch gekennzeichnet, dass** die besagten ersten Navigationsnachrichten vom Typ SBAS sind.

4. Endgerät nach einem der Ansprüche 1 bis 3, **dadurch gekennzeichnet, dass** die besagten Extraktionsmittel (ME) dazu geeignet sind, zusätzliche Navigationsdaten, welche in der Form von zweiten Navigationsnachrichten gestaltet sind, aus den besagten empfangenen ergänzten Rahmen zu extrahieren.

5. Endgerät nach Anspruch 4, **dadurch gekennzeichnet, dass** die besagten ergänzten Rahmen, welche die besagten zweiten Navigationsnachrichten enthalten, den besagten Verstärkern des besagten Telekommunikationsnetz entstammen.

6. Endgerät nach einem der Ansprüche 2 à 5, **dadurch gekennzeichnet, dass** die besagten Extraktionsmittel (ME) dazu geeignet sind, zusätzliche, in der Form der besagten ersten und der besagten zweiten Navigationsnachrichten gestaltete Daten aus den besagten ergänzten Rahmen zu extrahieren.

7. Endgerät nach einem der Ansprüche 1 bis 6, **dadurch gekennzeichnet, dass** die besagten Kommunikationsmittel (RH) und die besagten Extraktionsmittel (ME) dazu ausgelegt sind, in der Form von gemäß der sogenannten OFDM-Technik frequenzmodulierten Signalen übertragene ergänzte Rahmen zu empfangen und zu verarbeiten.

8. Endgerät nach Anspruch 4, 5, 6, oder nach der Kombination von Anspruch 7 mit einem beliebigen der Ansprüche 4 bis 6, **dadurch gekennzeichnet, dass** zumindest die besagten zweiten Navigationsnachrichten nach einer Frequenzumwandlung der Kommunikationsdaten in eine zyklische Rahmenpräambel integriert werden.

9. Endgerät nach einem der Ansprüche 1 bis 6, **dadurch gekennzeichnet, dass** die besagten Kommunikationsmittel (RH) und die besagten Extraktionsmittel (ME) dazu ausgelegt sind, um in der Form von phasenmodulierten Vielfachzugriffssignalen übertragene ergänzte Rahmen zu empfangen und zu verarbeiten.

10. Endgerät nach Anspruch 9, **dadurch gekennzeichnet, dass** die Phasen- und Vielfachzugriffsmodulation gemäß der sogenannten W-CDMA-Technik erfolgt.

11. Endgerät nach einem der Ansprüche 9 und 10, **dadurch gekennzeichnet, dass** die besagten Kommunikationsmittel (RH) und die besagten Extraktionsmittel dazu ausgelegt sind, ergänzte Rahmen, welche nach der Verschlüsselung der ersten und/oder zweiten Navigationsnachrichten (ME) anhand einer ausgewählten Folge von pseudozufälligen orthogonalen Codes übertragen wurden, zu empfangen und zu verarbeiten.

12. Endgerät nach einem der Ansprüche 5 bis 11, **dadurch gekennzeichnet, dass** die besagten Kommunikationsmittel (RH) und die besagten Extraktionsmittel (ME) dazu ausgelegt sind, ergänzte Rahmen mit Kenndaten, die dazu bestimmt sind, die besagten terrestrischen Verstärker (RT) voneinander zu unterscheiden, zu empfangen und zu verarbeiten.

13. Endgerät nach der Kombination der Ansprüche 11 und 12, **dadurch gekennzeichnet, dass** die besagten Kenndaten die in einer Sequenz verwendeten pseudozufälligen Codes sind.

14. Endgerät nach einem der Ansprüche 5 bis 13, **dadurch gekennzeichnet, dass** die besagten Empfangs- und Berechnungsmittel (DPS) Mittel zum Empfangen von Signalen (CR) und Mittel zum Berechnen (MC1) umfassen, welche dazu ausgelegt sind, ausgehend von den besagten empfangenen Signalen und den darin enthaltenen Navigationsdaten gemeinsam Pseudoentfernungen zu ermitteln, und dass die besagten Kommunikationsmittel (RH) und die besagten Extraktionsmittel (ME) dazu ausgelegt sind, ausgehend von den besagten empfangenen ergänzten Rahmen und den in den besagten zweiten Nachrichten, welche in den Rahmen enthalten sind, enthaltenen Navigationsdaten gemeinsam Pseudoentfernungen zu ermitteln, wobei diese Pseudoentfernungen sowie die von den besagten Empfangsmitteln (CR) und den besagten Berechnungsmitteln (MC1) ermittelten Pseudoentfernungen anschließend an die besagten Empfangs- und Berechnungsmittel (DPS) übertragen werden, um die besagten Positionen zu bestimmen.

15. Endgerät nach einem der Ansprüche 2 bis 14, **dadurch gekennzeichnet, dass** die besagten Empfangs- und Berechnungsmittel DPS) Korrekturmittel (MC1) umfassen, welche an die besagten Extraktionsmittel (ME) gekoppelt und dazu ausgelegt sind, ausgehend von den empfangenen ersten Navigationsnachrichten die an den von dem besagten Positionsbestimmungsnetz (CS) empfangenen Navigationsdaten vorzunehmenden Korrekturen zu ermitteln, bevor die Bestimmung der besagten Positionen durchgeführt wird.

16. Terrestrischer Verstärker (RT) für ein Telekommunikationsnetz einer Telekommunikationsanlage, weiterhin umfassend zumindest ein satellitenbasiertes Positionsbestimmungsnetz (CS), wobei dieses satellitenbasierte Positionsbestimmungsnetz dazu geeignet ist, Navigationsdaten enthaltende Signale auszugeben, wobei das besagte Telekommunikationsnetz mobile Kommunikationsendgeräte (UE) mit Empfangs- und Berechnungsmitteln (DPS), welche dazu geeignet sind, deren Position anhand der besagten Signale und Navigationsdaten zu ermitteln, sowie Kommunikationsmittel (RH), welche dazu geeignet sind, Kommunikationsdatenrahmen von dem besagten Telekommunikationsnetz zu empfangen, umfasst, **dadurch gekennzeichnet, dass** er Integrationsmittel (MI), welche dazu ausgelegt sind, zusätzliche Navigationsdaten an ausgewählten Stellen zumindest bestimmter der besagten Kommunikationsdatenrahmen zu integrieren, um ergänzte Rahmen zu bilden, sowie Sende-/Empfangsmittel (MER), welche dazu ausgelegt sind, die besagten ergänzten Rahmen an die besagten mobilen Endgeräte (UE) zu übertragen, umfasst.

17. Terrestrischer Verstärker nach Anspruch 16, **dadurch gekennzeichnet, dass** die besagten Sende-/Empfangsmittel (MER) dazu geeignet sind, von dem besagten Telekommunikationsnetz ergänzte Rahmen, welche in der Form von ersten Navigationsnachrichten gestaltete zusätzliche Navigationsdaten enthalten, zu empfangen und die besagten empfangenen ergänzten Rahmen an die besagten Kommunikationsendgeräte (UE) weiterzuleiten.

18. Terrestrischer Verstärker nach Anspruch 17, **dadurch gekennzeichnet, dass** die besagten ersten Navigationsnachrichten vom Typ SBAS sind.

19. Terrestrischer Verstärker nach einem der Ansprüche 16 bis 18, **dadurch gekennzeichnet, dass** die besagten Integrationsmittel (MI) dazu ausgelegt sind, ergänzte Rahmen zu bilden, indem zweite Navigationsnachrichten mit zusätzlichen Navigationsdaten integriert werden.

20. Terrestrischer Verstärker nach Anspruch 19 in Kombination mit einem der Ansprüche 17 bis 18, **dadurch gekennzeichnet, dass** die besagten Integrationsmittel (MI) dazu ausgelegt sind, zweite Navigationsnachrichten in die von dem besagten Telekommunikationsnetz empfangenen und erste Navigationsnachrichten enthaltenden ergänzten Rahmen zu integrieren.

21. Terrestrischer Verstärker nach einem der Ansprüche 19 und 20, **dadurch gekennzeichnet, dass** die besagten Integrationsmittel (MI) dazu ausgelegt sind, die besagten ergänzten Rahmen in der Form von nach der sogenannten OFDM-Technik frequenzmodulierten Signalen zu bilden.

22. Terrestrischer Verstärker nach Anspruch 21, **dadurch gekennzeichnet, dass** die besagten Integrationsmittel (MI) dazu ausgelegt sind, zumindest die besagten zweiten Navigationsnachrichten nach einer Frequenzumwandlung der Kommunikationsdaten in eine zyklische Präambel des Rahmens zu integrieren, um eine frequenzmäßige Synchronisierung mit den besagten Extraktionsmitteln (ME) der mobilen Endgeräte (UE) zu gewährleisten.

23. Terrestrischer Verstärker nach einem der Ansprüche 19 und 20, **dadurch gekennzeichnet, dass** die besagten Integrationsmittel (MI) dazu ausgelegt sind, die besagten ergänzten Rahmen in der Form von phasenmodulierten Vielfachzugriffssignalen zu übertragen.

24. Terrestrischer Verstärker nach Anspruch 23, **dadurch gekennzeichnet, dass** die Phasen- und Vielfachzugriffsmodulation gemäß der sogenannten W-CDMA-Technik erfolgt.

25. Terrestrischer Verstärker nach einem der Ansprüche 23 und 24, **dadurch gekennzeichnet, dass** die besagten Integrationsmittel (MI) dazu ausgelegt sind, ihre Übertragungen nach der Verschlüsselung der ersten und/oder der zweiten Navigationsnachrichten anhand einer ausgewählten Folge von pseudozufälligen orthogonalen Codes auszuführen.

26. Terrestrischer Verstärker nach einem der Ansprüche 19 bis 25, **dadurch gekennzeichnet, dass** die besagten Integrationsmittel (MI) dazu ausgelegt sind, Kenndaten, die dazu bestimmt sind, diese voneinander zu unterscheiden, in die besagten ergänzten Rahmen zu integrieren.

27. Terrestrischer Verstärker nach der Kombination der Ansprüche 25 und 26, **dadurch gekennzeichnet, dass** die besagten Kenndaten die in einer Sequenz verwendeten pseudozufälligen Codes sind.

28. Telekommunikationsnetz, **dadurch gekennzeichnet, dass** es zumindest einen terrestrischen Verstärker (RT) nach einem der Ansprüche 16 bis 27 und zumindest einen Flow-Server (SF) umfasst, wobei der besagte Flow-Server (SF) dazu geeignet ist, von einem Kommunikationsserver (SC) mit Kommunikationsdaten und von einem Navigationsserver (SEN) mit zusätzlichen Navigationsdaten versorgt zu werden und ausgehend von den besagten Kommunikationsdaten und den besagten zusätzlichen Navigationsdaten an zumindest die besagten terrestrischen Verstärker (RT) und die besagten mobilen Endgeräte (UE) zu übertragende sogenannte ergänzte Rahmen zu bilden.

29. Netzwerk nach Anspruch 28, **dadurch gekennzeichnet, dass** es in einer Gruppe, welche zumindest die Rundfunkübertragungsnetze, die satellitenunterstützten Übertragungsnetze vom Typ hybrid, die Breitband-Multimediadatenübertragungsnetze und die terrestrischen Mobilfunknetze umfasst, gewählt wird.

30. Telekommunikationsanlage, **dadurch gekennzeichnet, dass** sie zumindest eine Telekommunikationsnetz mit terrestrischen Verstärkern (RT) nach einem der Ansprüche 28 und 29, zumindest ein Netzwerk für die satellitenbasierte Positionsbestimmung (CS), welches dazu geeignet ist, Navigationsdaten enthaltende Signale auszugeben, und zumindest ein mobiles Kommunikationsendgerät (UE) nach einem der Ansprüche 1 bis 15 umfasst.

31. Verfahren zur Positionsbestimmung von mobilen Kommunikationsendgeräten (UE) innerhalb einer Telekommunikationsanlage mit mindestens einem Telekommunikationsnetz mit terrestrischen Verstärkern (RT), welches dazu geeignet ist, Kommunikationsdatenrahmen zu übertragen, und mindestens einem Netzwerk für die satellitenbasierte Positionsbestimmung (CS), welches dazu geeignet ist, Navigationsdaten enthaltende Signale auszugeben, **dadurch gekennzeichnet, dass** es darin besteht, i) Navigationsdaten enthaltende Signale anhand des besagten Positionsbestimmungsnetzwerks (CS) an die besagten mobilen Endgeräte (UE) zu übertragen, ii) durch das Integrieren von zusätzlichen Navigationsdaten an ausgewählten Stellen der Kommunikationsdatenrahmen ergänzte Rahmen zu bilden und die besagten ergänzten Rahmen anschließend an die besagten mobilen Endgeräte (UE) zu übertragen, und iii) auf Ebene der besagten mobilen Endgeräte (UE), ausgehend von den besagten in den besagten von dem besagten Positionsbestimmungsnetzwerk (CS) empfangenen ergänzten Rahmen enthaltenen Navigationsnachrichten und den in den besagten von dem besagten Telekommunikationsnetz empfangenen ergänzten Rahmen enthaltenen zusätzlichen Navigationsdaten deren jeweiligen Positionen zu bestimmen.

32. Verfahren nach Anspruch 31, **dadurch gekennzeichnet, dass** bestimmte der besagten zusätzlichen Navigationsdaten von dem besagten Positionsbestimmungsnetzwerk (CS) entstammen und vor den besagten terrestrischen Verstärkern (RT) in der Form von ersten Navigationsnachrichten in den besagten ergänzten Rahmen integriert werden.

33. Verfahren nach Anspruch 32, **dadurch gekennzeichnet, dass** die besagten ersten Navigationsnachrichten vom Typ SBAS sind.

34. Verfahren nach einem der Ansprüche 32 und 33, **dadurch gekennzeichnet, dass** man eine gewählte Anzahl von Malen die Integrierung einer ersten Navigationsnachricht in aufeinanderfolgende ergänzte Rahmen wiederholt.

35. Verfahren nach einem der Ansprüche 31 bis 34, **dadurch gekennzeichnet, dass** bestimmte der besagten zusätzlichen Navigationsdaten auf Ebene der besagten terrestrischen Verstärker (RT) in der Form von zweiten Navigationsnachrichten in den besagten ergänzten Rahmen integriert werden.

36. Verfahren nach Anspruch 35 in Kombination mit einem der Ansprüche 32 bis 34, **dadurch gekennzeichnet, dass** bestimmte der besagten zusätzlichen Navigationsdaten in der Form von zweiten Navigationsnachrichten auf Ebene der besagten terrestrischen Verstärker (RT) in empfangene, erste Navigationsdaten enthaltende ergänzte Rahmen integriert werden.

37. Verfahren nach einem der Ansprüche 35 und 36, **dadurch gekennzeichnet, dass** die besagten ergänzten Rahmen in der Form von gemäß der sogenannten OFDM-Technik frequenzmodulierten Signalen von den besagten terrestrischen Verstärkern (RT) übertragen werden.

38. Verfahren nach Anspruch 37, **dadurch gekennzeichnet, dass** man zumindest die besagten zweiten Navigationsnachrichten nach einer Frequenzumwandlung der Kommunikationsdaten in eine zyklische Präambel des Rahmens integriert, um eine frequenzmäßige Synchronisierung auf Ebene der besagten mobilen Endgeräte (UE) zu gewährleisten.

39. Verfahren nach einem der Ansprüche 35 und 36, **dadurch gekennzeichnet, dass** die besagten ergänzten Rahmen in der Form von phasenmodulierten Vielfachzugriffssignalen von den besagten terrestrischen Verstärkern (RT) übertragen werden.

40. Verfahren nach Anspruch 39, **dadurch gekennzeichnet, dass** die Phasen- und Vielfachzugriffsmodulation gemäß der sogenannten W-CDMA-Technik erfolgt.

41. Verfahren nach einem der Ansprüche 39 und 40, **dadurch gekennzeichnet, dass** die besagten ergänzten Rahmen nach der anhand einer ausgewählten Folge von pseudozufälligen orthogonalen Codes ausgeführten Verschlüsselung der ersten und/oder zweiten Navigationsnachrichten übertragen werden.

42. Verfahren nach einem der Ansprüche 35 bis 41, **dadurch gekennzeichnet, dass** man auf Ebene der besagten terrestrischen Verstärker (RT) Kenndaten in die besagten ergänzten Rahmen integriert, welche dazu bestimmt sind, diese voneinander zu unterscheiden.

43. Verfahren nach der Kombination der Ansprüche 41 und 42, **dadurch gekennzeichnet, dass** die besagten Kenndaten die in einer Sequenz verwendeten pseudozufälligen Codes sind.

44. Verfahren nach einem der Ansprüche 35 bis 43, **dadurch gekennzeichnet, dass** man auf Ebene der besagten mobilen Endgeräte (UE) Pseudoentfernungen, einerseits ausgehend von den besagten empfangenen Signalen und den darin enthaltenen Navigationsdaten, und andererseits ausgehend von den empfangenen ergänzten Rahmen und den Navigationsdaten, welche in den besagten zweiten Nachrichten enthalten sind, ermittelt, wobei diese Pseudoentfernungen anschließend dazu dienen, die besagten Positionen zu bestimmen.

45. Verfahren nach einem der Ansprüche 32 bis 44, **dadurch gekennzeichnet, dass** man in den besagten mobilen Endgeräten (UE) ausgehend von den empfangenen ersten Navigationsnachrichten die an den von dem besagten Positionsbestimmungsnetz (CS) empfangenen Navigationsdaten vor der Bestimmung der besagten Position vorzunehmenden Korrekturen bestimmt.
